# EUROPÄISCHE PATENTANMELDUNG

(11) **EP 4 032 771 A1**
(43) Veröffentlichungstag der Anmeldung: **27.07.2022**
(21) Anmeldenummer: 21216980.9
(22) Anmeldetag: 22.12.2021
(51) Int. Cl.: B60W 30/18, B60W 50/14, G08G 1/16

(54) **VERFAHREN ZUM ERZEUGEN EINER FAHRSPURWECHSELEMPFEHLUNG, SPURWECHSELASSISTENZSYSTEM SOWIE KRAFTFAHRZEUG MIT EINEM SPURWECHSELASSISTENZSYSTEM**

(30) Priorität: 25.01.2021 DE 102021200636
(71) Anmelder: VOLKSWAGEN AG, 38440 Wolfsburg (DE)
(72) Erfinder: Münning, Daniel, 38124 Braunschweig (DE); Ackert, Lukas, 38373 Frellstedt (DE)

(57) **Zusammenfassung**

Die Erfindung betrifft ein Verfahren zum Erzeugen einer Fahrspurwechselempfehlung (24) für ein Kraftfahrzeug (10) von einer Ausgangsfahrspur (12) in eine Zielfahrspur (14), wobei sich das Kraftfahrzeug (10) mit einer Eigengeschwindigkeit (vE) entlang der Ausgangsfahrspur (12) bewegt. Es wird eine aktuelle Eigenposition des Kraftfahrzeugs (10) entlang der Ausgangsfahrspur (12) in einer digitalen Umgebungskarte ermittelt. In der digitalen Umgebungskarte ist für die aktuelle Eigenposition entlang der Ausgangsfahrspur (12) eine bekannte Ausgangsfahrspurgeschwindigkeit (vA) hinterlegt. Ein Spurwechselassistent (34) vergleicht die Eigengeschwindigkeit (vE) des Kraftfahrzeugs (10) mit der Ausgangsfahrspurgeschwindigkeit (vA) und erzeugt die Fahrspurwechselempfehlung (24) sobald eine Abweichung zwischen der Eigengeschwindigkeit (vE) und der Ausgangsfahrspurgeschwindigkeit (vA) einen vorbestimmten Grenzwert erreicht.

## Beschreibung

Die Erfindung betrifft ein Verfahren zum Betreiben eines Fahrerassistenzsystems für ein Kraftfahrzeug, genauer zum Betreiben eines Spurwechselassistenzsystems, wobei eine Fahrspurwechselempfehlung für das Kraftfahrzeug erzeugt wird. Ferner betrifft die Erfindung ein solches Spurwechselassistenzsystem, sowie ein Kraftfahrzeug mit einem Spurwechselassistenzsystem.

Fahrerassistenzsysteme zum Unterstützen eines Fahrzeuglenkers beim Ausführen eines gewünschten oder geplanten oder erforderlichen Fahrmanövers sind hinlänglich bekannt. Hierzu zählen auch bekannte Systeme zum Unterstützen eines Fahrspurwechsels. Der Schwerpunkt der bekannten Spurwechselassistenzsysteme liegt in der Beobachtung eines ein Eigenfahrzeug oder Ego-Fahrzeug aktuell umgebenden Verkehrs. Die Beobachtung kann dabei durch Sensoren des Ego-Fahrzeugs erfolgen, oder auch durch eine Kommunikation zwischen dem Ego-Fahrzeug und den es umgebenden Verkehrsteilnehmern. Für den Fall, dass es sich bei den umgebenden Verkehrsteilnehmern um andere Kraftfahrzeuge (Fremdfahrzeuge) handelt, stützen sich die bekannten Spurwechselassistenzsysteme auf eine Car-2-Car-Kommunkation zwischen dem Ego-Fahrzeug und den anderen Verkehrsteilnehmern.

So beschreibt die US 2018/0061236 A1 eine Car-2-Car-Kommunikation, um einen Fahrspurwechsel abzusichern. Die Kommunikation findet hier zwischen den beteiligten Verkehrsteilnehmern im direkten zeitlichen Vorfeld eines Fahrspurwechsels statt und soll dessen Sicherheit erhöhen.

Die US 2020/0189598 A1 und die US 2015/0194055 A1 befassen sich mit einer Beobachtung eines fließenden Verkehrs, um eine Spurwechseloperation oder ein Spurwechselmanöver zu empfehlen. Hier werden insbesondere sich auftuende und/oder sich bewegende Lücken in einem aktuell das Ego-Fahrzeug umgebenden Verkehrsgeschehen beobachtet.

Den beschriebenen Spurwechselassistenzsystemen ist gemein, dass sie auf jeweils aktuelle Beobachtungen des Verkehrsgeschehens und/oder auf eine Live-Kommunikation mit den ein jeweiliges Ego-Fahrzeug umgebenden Kraftfahrzeugen angewiesen sind. Hieraus ergeben sich mehrere Nachteile. Zum einen erfordert eine permanente Beobachtung des umgebenden Verkehrsgeschehens und/oder eine mehr oder weniger konstant durchgeführte Live-Kommunikation mit anderen Verkehrsteilnehmern eine erhöhte Verarbeitungskapazität für die hierdurch anfallenden Daten innerhalb des Ego-Fahrzeugs. Mit anderen Worten muss eine nicht unbeträchtliche Rechenkapazität zur Verarbeitung der Beobachtungsergebnisse und/oder zur Verarbeitung der Kommunikationsströme im Ego-Fahrzeug vorgehalten werden. Zum anderen ermöglichen die bekannten Vorgehensweisen erst dann eine Abschätzung der Erfolgsaussichten eines Verkehrsmanövers, sobald sich das Ego-Fahrzeug schon in einer Verkehrssituation befindet, in der ein Verkehrsmanöver Auswirkungen auf andere Verkehrsteilnehmer haben wird. Ohne eine Präsenz anderer Verkehrsteilnehmer, die beobachtet werden können und/oder mit denen kommuniziert werden kann, ist den bekannten Systemen nämlich gar nicht die Möglichkeit gegeben, beispielsweise eine Sicherheit eines Spurwechselmanövers einzuschätzen.

Es ist die Aufgabe der Erfindung, die Sicherheit von Fahrspurwechselmanövern zu erhöhen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart.

Der Erfindung liegt dabei die Erkenntnis zugrunde, dass eine Sicherheit eines Fahrspurwechselmanövers insbesondere dadurch erhöht werden kann, dass das Manöver vorausschauend und unabhängig von aktuell vorhandenen weiteren Verkehrsteilnehmern geplant und ggf. auch durchgeführt werden kann.

Durch die Erfindung ist ein Verfahren zum Erzeugen einer Fahrspurwechselempfehlung für ein Kraftfahrzeug oder Ego-Fahrzeug von einer Ausgangsfahrspur in eine Zielfahrspur einer Straße, entlang derer sich das Kraftfahrzeug mit einer Eigengeschwindigkeit bewegt, bereitgestellt. Bei der Straße handelt es sich bevorzugt um eine mehrspurige Straße. Insbesondere kann es sich bei der Straße um eine Straße mit mehreren Fahrspuren je Fahrtrichtung handeln, wie beispielsweise eine Autobahn.

Während das Kraftfahrzeug mit der Eigengeschwindigkeit entlang der Ausgangsfahrspur der Straße fährt, wird eine jeweils aktuelle Eigenposition des Kraftfahrzeugs in einer digitalen Umgebungskarte ermittelt. Dies kann beispielsweise durch GPS-basierte und/oder koppelortungsbasierte Lokalisierungsverfahren erreicht werden (GPS - Global Positioning System).

Alternativ oder zusätzlich kann die Ermittlung der jeweils aktuellen Eigenposition auch mit Hilfe von Umgebungsdaten erfolgen. Dies ist im Folgenden näher beschrieben.

Es können durch eine Sensorvorrichtung die genannten Umgebungsdaten erfasst werden. Hierzu kann die Sensorvorrichtung eine Vielzahl an Sensoren aufweisen, beispielsweise Kamerasensoren und/oder Radarsensoren und/oder Lidarsensoren. Die Sensorvorrichtung kann fest in dem Kraftfahrzeug verbaut sein oder auch ohne weiteres aus dem Kraftfahrzeug entfernbar, beispielsweise als eine Nachrüstlösung, ausgestaltet sein.

Die Umgebungsdaten, die durch die Sensorvorrichtung erfasst werden können, können jeweils aktuelle Abstände des Kraftfahrzeugs zu vorbestimmten ortsfesten Landmarken in einer Umgebung des Kraftfahrzeugs umfassen. Eine solche Landmarke kann beispielsweise eine Infrastrukturkomponente, wie ein Verkehrsschild oder eine Ampel oder ein charakteristisch ausgebildeter Abschnitt einer Leitplanke sein. Als Landmarke kommt allerdings auch eine Bebauung und/oder Bepflanzung entlang der Straße in Betracht. Die Kamerasensoren der Sensorvorrichtung können dazu ausgebildet sein, anhand aufgenommener Bilddatensätze die Landmarken zu erkennen. Hierzu können bekannte Bilddatenverarbeitungsalgorithmen zum Einsatz kommen. Die Radarsensoren der Sensorvorrichtung wiederrum können dazu ausgebildet sein, einen aktuellen Abstand des Kraftfahrzeugs zu einer solchen erkannten Landmarke zu bestimmen. Die Landmarken können in der digitalen Umgebungskarte der Straße verzeichnet oder hinterlegt sein. Mit anderen Worten kann eine digitale Umgebungskarte oder Straßenkarte für die Straße existieren, entlang derer sich das Ego-Fahrzeug bewegt. In dieser digitalen Umgebungskarte können die örtlichen oder geographischen Positionen der Landmarken eingetragen sein.

Bevorzugt kann eine Lokalisierungseinheit eine oder mehrere der erkannten Landmarken in der digitalen Umgebungskarte auffinden. Anhand der jeweils aktuellen Abstände des Kraftfahrzeugs zu den Landmarken kann dann die jeweils aktuelle Eigenposition des Kraftfahrzeugs entlang der Ausgangsfahrspur der Straße in der digitalen Umgebungskarte bestimmt werden. Mit anderen Worten kann das Ego-Fahrzeug anhand der erkannten Landmarken exakt in der digitalen Umgebungskarte lokalisiert werden. Die Lokalisation kann dabei bevorzugt eine Genauigkeit oder Auflösung von weniger als 5 m, insbesondere weniger als 3,5 m aufweisen. Hierdurch kann erkannt werden, entlang welcher Spur einer mehrspurigen Straße, beispielsweise einer Autobahn, sich das Ego-Fahrzeug bewegt.

In der digitalen Umgebungskarte können nicht nur die Positionen der Landmarken hinterlegt sein, sondern noch weitere Informationen zu der Straße und/oder der Umgebung.

Erfindungsgemäß ist in der digitalen Umgebungskarte für die jeweils aktuelle Eigenposition entlang der Ausgangsfahrspur eine durchschnittliche bekannte Ausgangsfahrspurgeschwindigkeit hinterlegt. Diese bekannte Ausgangsfahrspurgeschwindigkeit kann anhand von historischen Geschwindigkeitsdaten oder Schwarmdaten anderer Kraftfahrzeuge, welche in der Vergangenheit entlang der Ausgangsfahrspur gefahren sind, berechnet worden und in der Karte hinterlegt worden sein (Schwarmdatenanalyse).

Erfindungsgemäß vergleicht ein Spurwechselassistent die Eigengeschwindigkeit des Ego-Fahrzeugs mit der aus der Schwarmdatenanalyse resultierenden Ausgangsfahrspurgeschwindigkeit. Sobald eine Abweichung zwischen der Eigengeschwindigkeit und der Ausgangsfahrspurgeschwindigkeit einen vorbestimmten Grenzwert erreicht, erzeugt der Spurwechselassistent eine Fahrspurwechselempfehlung von der Ausgangsfahrspur in die Zielfahrspur.

Durch die Erfindung ergibt sich der Vorteil, dass das Ego-Fahrzeug nicht auf eine Live-Kommunikation mit anderen, es aktuell umgebenden Verkehrsteilnehmern angewiesen ist, um die Notwendigkeit eines Fahrspurwechsels zu erkennen. Mit anderen Worten kann die Notwendigkeit eines Fahrspurwechsels unabhängig von einem aktuellen Verkehrsaufkommen erkannt werden. Dies ist beispielsweise dann der Fall, wenn das Ego-Fahrzeug anhand des geschilderten Geschwindigkeitsabgleichs feststellt, dass es mit seiner aktuellen Eigengeschwindigkeit nicht zu der Durchschnittsgeschwindigkeit seiner aktuellen Fahrspur passt. Dadurch, dass eine Empfehlung für einen Fahrspurwechsel bereits anhand des Geschwindigkeitsabgleichs getroffen werden kann, kann eine Situation vermieden werden, in der sich erst ein anderer Verkehrsteilnehmer, beispielsweise ein anderes Kraftfahrzeug, dem Ego-Fahrzeug derart nähern muss, dass dieses zu einem Fahrspurwechsel gezwungen wird. Es ist also mit anderen Worten eine Vermeidung von kritischen Fahrsituationen ermöglicht und eine Sicherheit eines Fahrspurwechsels gegenüber den bekannten Verfahren vorteilhaft erhöht.

Zu der Erfindung gehören auch Ausführungsformen, durch die sich zusätzliche Vorteile ergeben.

Eine Ausführungsform sieht vor, dass der Spurwechselassistent die Fahrspurwechselempfehlung erzeugt, sobald die Eigengeschwindigkeit näher an einer durchschnittlichen bekannten Zielfahrspurgeschwindigkeit liegt, als an der Ausgangsfahrspurgeschwindigkeit. Mit anderen Worten ist aus den Schwarmdaten oder aus der Schwarmdatenanalyse nicht nur eine Ausgangsfahrspurgeschwindigkeit bekannt, sondern auch eine durchschnittliche Zielfahrspurgeschwindigkeit der Zielfahrspur. Wird also erkannt, dass die aktuell gefahrene Eigengeschwindigkeit des Ego-Fahrzeugs näher an der Zielfahrspurgeschwindigkeit liegt, als an der Ausgangsfahrspurgeschwindigkeit, entlang welcher das Ego-Fahrzeug aktuell fährt, wird die Spurwechselempfehlung erzeugt. Beträgt beispielsweise die bekannte Ausgangsfahrspurgeschwindigkeit 120 km/h und die Zielfahrspurgeschwindigkeit 80 km/h, so würde gemäß der hier beschriebenen Ausführungsform die Fahrspurwechselempfehlung erzeugt, sobald die Eigengeschwindigkeit des Ego-Fahrzeugs unter 100 km/h beträgt. Sind mehrere mögliche Zielfahrspuren vorhanden, so kann hierdurch in vorteilhafter Weise nicht nur angezeigt werden, dass ein Fahrspurwechsel weg von der Ausgangsfahrspur sinnvoll wäre, sondern es kann zusätzlich angezeigt werden, zu welcher der möglichen Zielfahrspuren die aktuell gefahrene Eigengeschwindigkeit am besten passt. Ein anschauliches Beispiel hierfür ist die Fahrt auf einer Autobahn. Eine Autobahn kann drei Fahrspuren aufweisen, wobei gemäß den Regeln des Rechtsverkehrs auf der rechten der drei Spuren am langsamsten gefahren wird und auf der linken der drei Spuren am schnellsten. Die mittlere Spur wird in der Regel mit einer Geschwindigkeit befahren, die zwischen den typischerweise auf der rechten und der linken Spur auftretenden Geschwindigkeiten liegt. Eine durchschnittliche gefahrene Geschwindigkeit auf der rechten Spur kann beispielsweise 80 km/h betragen, auf der mittleren Spur 100 km/h und auf der ganz linken Spur 120 km/h. Wird nun ermittelt, dass das Ego-Fahrzeug mit einer Geschwindigkeit zwischen 80 und 90 km/h auf der linken Spur fährt, so kann eine Fahrspurwechselempfehlung erzeugt werden, welche empfiehlt, nicht nur von der linken Spur weg zu wechseln, sondern am besten in die ganz rechte Fahrspur zu wechseln, da die Eigengeschwindigkeit am besten zu der für die rechte Spur typischen Fahrgeschwindigkeit passt.

Eine bevorzugte Ausführungsform sieht vor, dass der Spurwechselassistent die Fahrspurwechselempfehlung erzeugt, wenn erkannt wird, dass die Zielfahrspur zumindest innerhalb eines Zielbereichs frei ist. Mit Zielbereich ist der Bereich der Zielfahrspur gemeint, in dem das Ego-Fahrzeug bei einem Spurwechsel in der Zielfahrspur voraussichtlich ankommen würde. Hierdurch erhöht sich in vorteilhafter Weise die Sicherheit eines Fahrspurwechsels. Dass die Zielfahrspur innerhalb des Zielbereichs frei ist, kann beispielsweise ebenfalls durch die Kamerasensoren der Sensorvorrichtung erkannt werden.

Gemäß einer weiteren vorteilhaften Ausführungsform wird die Fahrspurwechselempfehlung erzeugt, wenn die Zielfahrspur zumindest einer vorbestimmten Fahrspurkategorie zugeordnet ist. Mit anderen Worten wird die Fahrspurwechselempfehlung nur dann erzeugt, wenn die Zielfahrspur beispielsweise keine Ausfahrt ist oder kein Standstreifen. Die Information hinsichtlich der Fahrspurkategorie der Zielfahrspur kann sich aus den in der digitalen Umgebungskarte hinterlegten Informationen in Form der Schwarmdaten ergeben.

Alternativ oder zusätzlich kann vorgesehen sein, dass der Spurwechselassistent die Fahrspurwechselempfehlung erzeugt, wenn zumindest ein Abstand zwischen dem Ego-Fahrzeug und zumindest einem weiteren Kraftfahrzeug in der Ausgangsfahrspur kleiner als ein vorbestimmter Mindestabstand ist. Mit anderen Worten kann die Fahrspurwechselempfehlung auch bei einem Abweichen der Eigengeschwindigkeit von der durchschnittlichen Ausgangsfahrspurgeschwindigkeit erst dann erzeugt werden, wenn das Ego-Fahrzeug beispielsweise zu nah auf ein vorausfahrendes anderes Kraftfahrzeug auffährt und/oder wenn sich dem Ego-Fahrzeug von hinten ein auffahrendes Kraftfahrzeug derart nähert, dass der vorbestimmte Mindestabstand unterschritten wird. Hierdurch ergibt sich der Vorteil, dass unnötige Fahrspurwechsel vermieden werden.

Alternativ oder zusätzlich kann es vorgesehen sein, dass der Spurwechselassistent die Fahrspurwechselempfehlung erzeugt, wenn erkannt wird, dass sich ein weiteres Kraftfahrzeug dem Kraftfahrzeug oder Ego-Fahrzeug von hinten mit einer vorbestimmten Mindestgeschwindigkeit annähert. Mit anderen Worten kann eine Bedingung für die Ausgabe der Fahrspurwechselempfehlung sein, dass sich das weitere Kraftfahrzeug dem Ego-Fahrzeug derart von hinten annähert, dass Potenzial für eine kritische Fahrsituation besteht. Dies kann beispielsweise dann der Fall sein, wenn das sich von hinten dem Ego-Fahrzeug nähernde Kraftfahrzeug eine Geschwindigkeit aufweist, die beispielsweise mindestens das Eineinhalbfache der Eigengeschwindigkeit des Ego-Fahrzeugs beträgt. Das Sich-Annähern des auffahrenden Kraftfahrzeugs kann auf unterschiedliche Weise erkannt werden. Beispielsweise kann das Ego-Fahrzeug selbst mittels Radars und/oder Lidars erkennen, dass sich das Kraftfahrzeug von hinten nähert. Alternativ oder zusätzlich kann per Car-2-Car-Kommunikation von dem auffahrenden Kraftfahrzeug an das Ego-Fahrzeug signalisiert werden, dass es sich annähert.

Eine mögliche Ausgestaltungsform der zuletzt beschriebenen Ausführungsform kann darin bestehen, dass das Ego-Fahrzeug und/oder das auffahrende Kraftfahrzeug erkennt, dass eine mögliche Zielfahrspur frei ist. Dies kann durch Kamerasensoren und/oder Radar-und/oder Lidarsensoren der Fahrzeuge ermittelt werden. Mit anderen Worten kann die Fahrspurwechselempfehlung dann erzeugt werden, wenn sich ein auffahrendes Kraftfahrzeug wie oben beschrieben mit einer Differenzgeschwindigkeit von hinten an das Ego-Fahrzeug annähert und wenn gleichzeitig eine mögliche Zielfahrspur frei ist. In diesem Zusammenhang ist die oben beschriebene Nutzung der Schwarmdaten zur Ermittlung einer Fahrspurkategorie der freien Zielfahrspur besonders vorteilhaft. Hierdurch kann in vorteilhafter Weise sichergestellt werden, dass keine Fahrspurwechselempfehlung auf eine Ausfahrt und/oder einen Standstreifen erzeugt wird.

Alternativ oder zusätzlich kann das auffahrende Kraftfahrzeug bei freier Zielfahrspur über Car-2-Car Kommunikation eine Warnung an das Ego-Fahrzeug ausgeben.

Gemäß einer weiteren vorteilhaften Ausführungsform erzeugt der Spurwechselassistent die Fahrspurwechselempfehlung, wenn erkannt wird, dass das Ego-Fahrzeug zumindest einmal durch ein weiteres Kraftfahrzeug auf der Zielfahrspur überholt wird. Insbesondere wird die Fahrspurwechselempfehlung dann erzeugt, wenn ein solcher Überholvorgang innerhalb eines vorbestimmten Zeitintervalls geschieht. Für die Fahrsituation auf einer Autobahn, in der das Ego-Fahrzeug auf der linken, also schnellsten, Fahrspur unterwegs ist und beispielsweise innerhalb von 10 Minuten mindestens einmal auf einer rechten Fahrspur überholt wird, kann dies besonders vorteilhaft sein.

Gemäß einer bevorzugten Ausführungsform wird die Ausgangsfahrspurgeschwindigkeit und/oder die Zielfahrspurgeschwindigkeit durch einen Vergleich mit zumindest einer weiteren durchschnittlichen bekannten Fahrgeschwindigkeit einer zu der Ausgangsfahrspur und/oder der Zielfahrspur benachbart angeordneten weiteren Fahrspur plausibilisiert. Hierdurch ergibt sich der Vorteil einer erhöhten Absicherung der Informationen über die einzelnen Fahrspuren, die durch die Schwarmdatenanalyse bereitgestellt werden.

Die Erfindung betrifft darüber hinaus ein Spurwechselassistenzsystem, das dazu ausgebildet ist, ein erfindungsgemäßes Verfahren durchzuführen. Das Spurwechselassistenzsystem kann eine Sensorvorrichtung umfassen, die dazu ausgebildet ist, die durch die Sensorvorrichtung ausgeführten Verfahrensschritte des Verfahrens auszuführen. Eine solche Sensorvorrichtung kann beispielsweise einen oder mehrere Kamerasensoren und/oder Radarsensoren und/oder Lidarsensoren umfassen. Die Sensorvorrichtung kann darüber hinaus eine Recheneinheit umfassen, die dazu ausgebildet ist, die durch die jeweiligen Sensoren erfassten Daten zu verarbeiten. Das Spurwechselassistenzsystem kann außerdem eine Lokalisierungseinheit umfassen, die dazu ausgebildet ist, die Verfahrensschritte auszuführen, die gemäß dem Verfahren von der Lokalisierungseinheit ausgeführt werden können. Insbesondere kann in der Lokalisierungseinheit die digitale Umgebungskarte hinterlegt sein. Darüber hinaus kann das Spurwechselassistenzsystem einen Spurwechselassistenten umfassen, der dazu ausgebildet ist, die den Spurwechselassistenten betreffenden erfindungsgemäßen Verfahrensschritte durchzuführen. Hierzu zählt insbesondere das Erzeugen der Fahrspurwechselempfehlung und/oder das Generieren einer entsprechenden Anzeige für einen Fahrzeuginsassen oder Fahrzeuglenker.

Darüber hinaus betrifft die vorliegende Erfindung ein Kraftfahrzeug mit einem solchen Spurwechselassistenzsystem.

Zu der Erfindung gehören auch Weiterbildungen des erfindungsgemäßen Spurwechselassistenzsystems und/oder des erfindungsgemäßen Kraftfahrzeugs, die Merkmale aufweisen, wie sie bereits im Zusammenhang mit den Weiterbildungen des erfindungsgemäßen Verfahrens beschrieben worden sind und umgekehrt. Aus diesem Grund sind die entsprechenden Weiterbildungen des erfindungsgemäßen Spurwechselassistenzsystems und/oder des erfindungsgemäßen Kraftfahrzeugs hier nicht noch einmal beschrieben.

Die Erfindung umfasst auch die Kombinationen der Merkmale der beschriebenen Ausführungsformen. Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer beispielhaften Fahrsituation;
- Fig. 2: eine schematische Darstellung einer weiteren beispielhaften Fahrsituation;
- Fig. 3: eine schematische Darstellung einer Übertragung von Schwarmdaten von einer zentralen Servereinrichtung zu einem Spurwechselassistenzsystem;
- Fig. 4: eine schematische Darstellung eines Verfahrens zum Erzeugen einer Fahrspurwechselempfehlung gemäß einer bevorzugten Ausführungsform der Erfindung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

Gleiche oder funktionsgleiche Elemente sind in den Figuren mit den gleichen Bezugszeichen versehen.

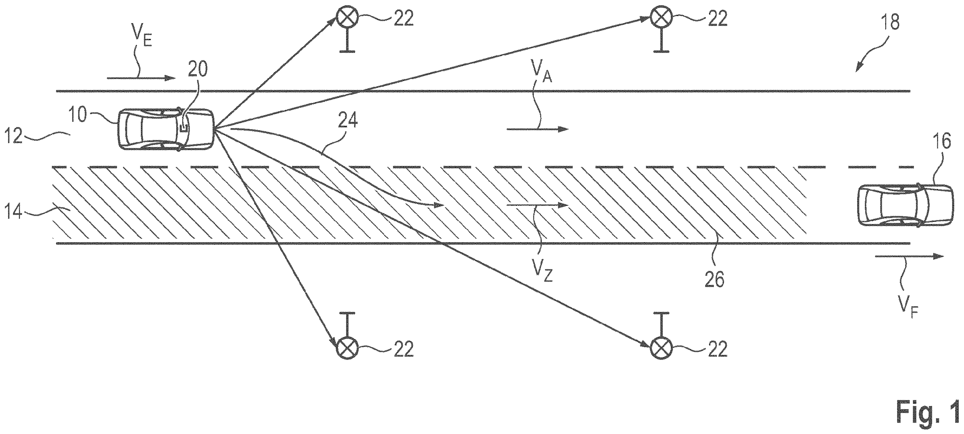

Fig. 1 zeigt eine beispielhafte Fahrsituation. In der gezeigten Fahrsituation bewegt sich ein Kraftfahrzeug oder Ego-Fahrzeug 10 mit einer Eigengeschwindigkeit v_{E} entlang einer Ausgangsfahrspur 12. Entlang einer zu der Ausgangsfahrspur 12 benachbart angeordneten Zielfahrspur 14 bewegt sich ein weiteres Kraftfahrzeug oder Fremdfahrzeug 16 mit einer Fremdfahrzeuggeschwindigkeit v_{F}. Die beiden Fahrspuren 12, 14 sind Bestandteil einer Straße 18, entlang derer sich die beispielhafte Fahrsituation abspielt.

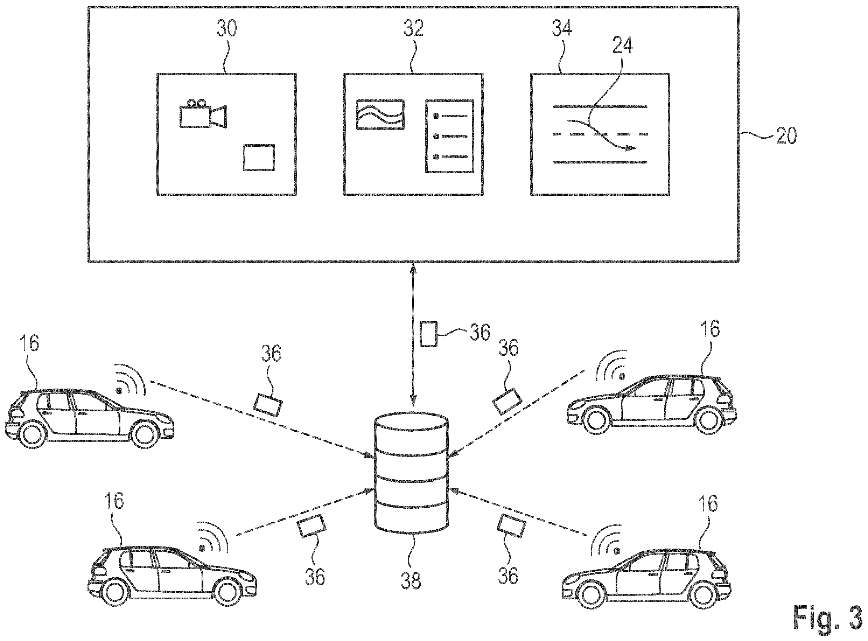

In dem in Fig. 1 gezeigten Ausführungsbeispiel weist das Ego-Fahrzeug 10 ein Spurwechselassistenzsystem 20 auf, welches im Zusammenhang mit den Ausführungen zu Fig. 3 detailliert beschrieben ist. Die im Folgenden geschilderte Fahrsituation umfasst Verfahrensschritte, welche durch die ebenfalls im Zusammenhang mit Fig. 3 näher beschriebenen Komponenten des Spurwechselassistenzsystems 20 durchgeführt werden. Der Übersichtlichkeit halber sind diese Komponenten in der hier beschriebenen Fig. 1 nicht detailliert dargestellt. Für eine detaillierte Beschreibung der genannten Komponenten sei der Leser auf die Ausführungen im Zusammenhang mit Fig. 3 verwiesen.

Im Ego-Fahrzeug 10 können während der Fahrt entlang der Ausgangsfahrspur 12 Umgebungsdaten erfasst werden, welche jeweils aktuelle Abstände des Ego-Fahrzeugs 10 zu vorbestimmten ortsfesten Landmarken 22 in einer Umgebung des Ego-Fahrzeugs 10 umfassen. Die jeweils aktuellen Abstände sind in Fig. 1 beispielhaft durch Pfeile zwischen dem Ego-Fahrzeug 10 und den hier ebenfalls beispielhaft gezeigten vier Landmarken 22 dargestellt.

Anhand der jeweils aktuellen Abstände zu den Landmarken 22 kann das Ego-Fahrzeug 10 in einer hier nicht dargestellten digitalen Umgebungskarte der Straße 18 lokalisiert werden. Mit anderen Worten kann anhand der Abstände des Ego-Fahrzeugs 10 zu den Landmarken 22 eine jeweils aktuelle Eigenposition des Ego-Fahrzeugs 10 entlang der Ausgangsfahrspur 12 in der digitalen Umgebungskarte bestimmt werden.

Die jeweils aktuelle Eigenposition kann auch auf andere Weise ermittelt werden, beispielsweise durch GPS-basierte und/oder koppelortungsbasierte Verfahren.

In der digitalen Umgebungskarte kann eine durchschnittliche bekannte Ausgangsfahrspurgeschwindigkeit v_{A} hinterlegt sein.

Der in Fig. 1 beispielhaft dargestellten Fahrsituation kann zugrunde liegen, dass die Eigengeschwindigkeit v_{E} des Ego-Fahrzeugs 10 von der Ausgangsfahrspurgeschwindigkeit v_{A} abweicht. Für den Fall, dass eine Abweichung zwischen der Eigengeschwindigkeit v_{E} und der Ausgangsfahrspurgeschwindigkeit v_{A} einen vorbestimmten Grenzwert erreicht, kann eine Fahrspurwechselempfehlung 24 für das Ego-Fahrzeug 10 erzeugt werden. Wird beispielsweise erkannt, dass die Eigengeschwindigkeit v_{E} des Ego-Fahrzeugs 10 näher an einer Zielfahrspurgeschwindigkeit v_{Z} liegt, als an der Ausgangsfahrspurgeschwindigkeit v_{A}, kann eine besonders dringende Fahrspurwechselempfehlung 24 erzeugt werden.

Befolgt ein Fahrzeugführer des Ego-Fahrzeugs 10 die Fahrspurwechselempfehlung 24, so wird er sich innerhalb eines hier schraffiert dargestellten Zielbereichs 26 der Zielfahrspur 14 hinter dem Fremdfahrzeug 16 einordnen. In der Folge ist die Ausgangsfahrspur 12 dann frei für andere hier nicht dargestellte Verkehrsteilnehmer, deren Geschwindigkeit der Ausgangsfahrspurgeschwindigkeit v_{A} entspricht.

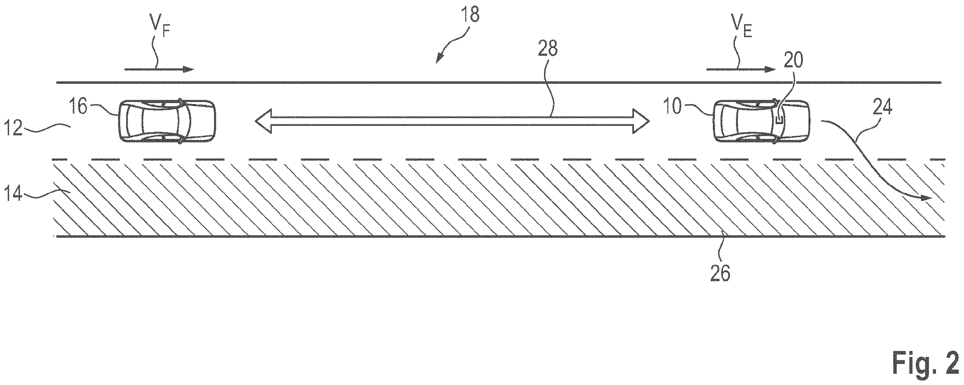

Unter Bezugnahme auf die im Zusammenhang mit Fig. 1 bezeichneten und beschriebenen Komponenten ist in Fig. 2 schematisch eine weitere beispielhafte Fahrsituation dargestellt. In der hier dargestellten Fahrsituation befindet sich das Ego-Fahrzeug 10, welches mit einer Eigengeschwindigkeit v_{E} fährt, vor einem Fremdfahrzeug 16, welches mit einer Fremdfahrzeuggeschwindigkeit v_{F} fährt, in der Ausgangsfahrspur 12. Für die hier dargestellte Fahrsituation sei angenommen, dass die Fremdfahrgeschwindigkeit v_{F} des Fremdfahrzeugs 16 mindestens 1,5-mal so groß ist, wie die Eigengeschwindigkeit v_{E} des Ego-Fahrzeugs 10. Wird ein vorbestimmter Mindestabstand 28 zwischen den beiden Fahrzeugen 10, 16 unterschritten, kann eine dringende Fahrspurwechselempfehlung 24 ausgegeben werden. Bevorzugt wird die Fahrspurwechselempfehlung 24 dann erzeugt, wenn erkannt wird, dass die Zielfahrspur 14 zumindest innerhalb des Zielfahrbereichs 26 frei ist. Bevorzugt kann eine zusätzliche oder alternative Car-2-Car-Kommunikation zwischen dem Fremdfahrzeug 16 und dem Ego-Fahrzeug 10 stattfinden. Bevorzugt kann anhand von Informationen in der digitalen Umgebungskarte erkannt werden, dass die Zielfahrspur 14 keine Ausfahrt oder kein Standstreifen ist. Mit anderen Worten kann mittels der in der digitalen Umgebungskarte hinterlegten Schwarmdaten eine Absicherung der Zielfahrspur 14 erfolgen.

Unter Bezugnahme auf die im Zusammenhang mit den Figuren 1 und 2 bezeichneten und beschriebenen Komponenten beschreibt Fig. 3 schematisch eine mögliche Ausführungsform eines Spurwechselassistenzsystems 20. In der hier gezeigten Ausführungsform umfasst das Spurwechselassistenzsystem 20 eine Sensorvorrichtung 30, eine Lokalisierungseinheit 32 sowie einen Spurwechselassistenten 34. Das Spurwechselassistenzsystem 20 kann dazu ausgebildet sein, historische Fahrdaten oder Schwarmdaten 36 einer Vielzahl von Fremdfahrzeugen 16 zu empfangen. Die Schwarmdaten 36 können zuvor von den Fremdfahrzeugen 16 an eine zentrale Servereinrichtung 38 übermitteln worden sein, wo sie beispielsweise mit der digitalen Umgebungskarte zusammengeführt werden können. Zwischen der Servereinrichtung 38 und dem Spurwechselassistenzsystem 20 kann eine Kommunikationsverbindung bereitgestellt sein, um die Schwarmdaten 36 zu übertragen. Das Spurwechselassistenzsystem 20 kann auch dazu ausgebildet sein, eigene Informationen an die Servereinrichtung 38 zu übermitteln.

Die Schwarmdaten 36 können beispielsweise Informationen darüber enthalten, mit welchen Fahrtgeschwindigkeiten die Fremdfahrzeuge 16 in einer jeweiligen Ausgangsfahrspur 12 und/oder Zielfahrspur 14 typischerweise gefahren sind. Mit anderen Worten kann es sich bei den Schwarmdaten 36 um historische Fahrtgeschwindigkeitsdaten der Fremdfahrzeuge 16 handeln. Die Durchschnittsgeschwindigkeit kann in Zukunft uhrzeitabhängig aufgelöst werden. Die Uhrzeit kann also als zusätzlicher Parameter in den Abgleich der unterschiedlichen Fahrgeschwindigkeiten einfließen. In der Servereinrichtung 38 können die Schwarmdaten 36 mit der bereits genannten digitalen Umgebungskarte der Straße 18 zusammengeführt werden. Im Ergebnis liegt also eine digitale Umgebungskarte vor, wobei die Umgebungskarte Informationen darüber enthält, mit welcher Geschwindigkeit Fahrzeuge typischerweise entlang den auf der Umgebungskarte hinterlegten Straßen 18 fahren.

Die Lokalisierungseinheit 32 des Spurwechselassistenzsystems 20 kann wie oben beschrieben dazu in der Lage sein, eine jeweilige Eigenposition des Ego-Fahrzeugs 10 anhand der oben beschriebenen Abstände des Ego-Fahrzeugs 10 zu den bekannten Landmarken 22 zu bestimmen. Hierzu kann die Lokalisierungseinheit 32 Sensordaten, beispielsweise Kameradaten, der Sensorvorrichtung 30 nutzen. Wird erkannt, beispielsweise in der Lokalisierungseinheit 32, dass eine aktuelle Eigengeschwindigkeit v_{E} des Ego-Fahrzeugs 10 von einer aus den Schwarmdaten 36 ermittelten Ausgangsfahrspurgeschwindigkeit v_{A} abweicht, so kann eine Fahrspurwechselempfehlung 24 von dem Spurwechselassistenten 34 des Spurwechselassistenzsystems 20 erzeugt werden.

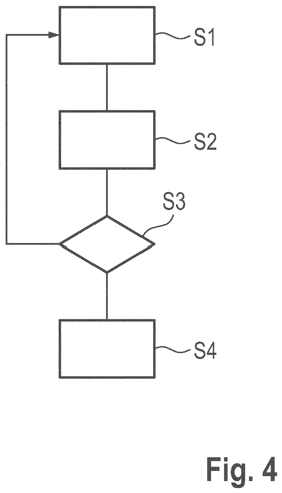

Fig. 4 zeigt unter Bezugnahme auf die obigen Ausführungen schematisch ein Verfahren zum Erzeugen einer Fahrspurwechselempfehlung 24. Das Ausgangsszenario für das hier beschriebene Verfahren kann sein, dass ein Ego-Fahrzeug 10 mit einer Eigengeschwindigkeit v_{E} entlang einer Ausgangsfahrspur 12 einer Straße 18 fährt. In einem Verfahrensschritt S1 kann eine Sensorvorrichtung 30 Umgebungsdaten erfassen, wobei die Umgebungsdaten jeweils aktuelle Abstände des Kraftfahrzeugs 10 zu vorbestimmten ortsfesten Landmarken 22 in einer Umgebung des Kraftfahrzeugs 10 umfassen. In einem Verfahrensschritt S2 kann eine Lokalisierungseinheit 32 die Landmarken 22 in einer digitalen Umgebungskarte der Straße 18 auffinden und anhand der jeweils aktuellen Abstände des Kraftfahrzeugs 10 zu den Landmarken 22 eine jeweils aktuelle Eigenposition des Kraftfahrzeugs 10 entlang der Ausgangsfahrspur 12 in der digitalen Umgebungskarte bestimmen. Wie bereits beschrieben, kann in der digitalen Umgebungskarte für jeweils aktuelle Eigenpositionen des Kraftfahrzeugs 10 entlang der Ausgangsfahrspur 12 eine durchschnittliche bekannte Ausgangsfahrspurgeschwindigkeit v_{A} hinterlegt sein. Diese kann beispielsweise aus Schwarmdaten 36 berechnet werden. In einem Verfahrensschritt S3 kann ein Spurwechselassistent 34 die Eigengeschwindigkeit v_{E} des Kraftfahrzeugs 10 mit der Ausgangsfahrspurgeschwindigkeit v_{A} vergleichen. Wird anhand des Vergleichs erkannt, dass eine Abweichung zwischen der Eigengeschwindigkeit v_{E} und der Ausgangsfahrspurgeschwindigkeit v_{A}einen vorbestimmten Grenzwert erreicht, so kann der Spurwechselassistent 34 eine Fahrspurwechselempfehlung 24 für das Kraftfahrzeug 10 erzeugen. Dies erfolgt in einem Verfahrensschritt S4. Wird der vorbestimmte Grenzwert jedoch nicht erreicht, so kann der Verfahrensschritt S4 unterbleiben und stattdessen die Erfassung der Umgebungsdaten gemäß Verfahrensschritt S1 fortgesetzt werden.

Viele Fahrer haben auf Autobahnen Probleme mit der Wahl der korrekten Fahrspur. Häufig wird auf der Überholspur gefahren, obwohl dies nicht notwendig und gemäß des Rechtsfahrgebotes untersagt ist. Wenn ein schnelles Fahrzeug sich von hinten nähert, können aufgrund dieser Verhaltensfehler und hoher Differenzgeschwindigkeiten kritische Situationen entstehen. Car2X-Kommunikation kann eingesetzt werden, um die Verkehrsteilnehmer vor einer potenziell kritischen Situation zu warnen.

Die Erfindung sieht vor, Schwarmdaten zu nutzen, um Fahrspuren sicher zu identifizieren. Außerdem können die Schwarmdaten genutzt werden, um eine automatisierte Spurwechselempfehlung auszugeben, beispielsweise um den Fahrer zu entlasten. Nähert sich ein schnelles Fahrzeug von hinten, kann eine Warnkaskade eingeleitet werden Die Erfindung unterstützt zum einen dabei, das Rechtsfahrgebot (geht auch im Linksverkehr) zu beachten, zum anderen dient es aber auch der Abwehr von kritischen Situationen, wenn Fahrzeuge mit hoher Differenzgeschwindigkeit aufeinander treffen.

Schwarmdaten ermöglichen es, höchstmögliche Konfidenz über den Typ der Nachbarspur (oder eine Fahrspurkategorie einer möglichen Zielfahrspur) zu erzeugen, u.a. mittels Abgleichs der Schwarmgeschwindigkeit mit der Ego-Fahrzeug-Geschwindigkeit.

Die Erfindung folgt dem Prinzip, Fahrzeugsensorik (Radar, Kamera, PDC, ...) einzusetzen, um ein Umfeldmodell um das Fahrzeug zu berechnen. Durch den Einsatz von Umfeldsensorik, wie sie in modernen Serienfahrzeugen zum Einsatz kommt, ist es möglich, ein sehr genaues Modell des Fahrzeugumfelds zu bilden. Beispielsweise durch Frontradare, Fronteckradare, Heckradare, Ultraschall, Laserscanner und/oder Kameras können alle Fahrzeuge erfasst werden, welche das Ego-Fahrzeug umgeben.

Mithilfe von digitalen Karten und Schwarmdaten (REM - Road Experience Management) liegt daneben eine sehr genaue Information über die Befahrbarkeit der einzelnen Fahrspuren vor. So kann beispielsweise eine Abbiegespur oder auch ein Standstreifen identifiziert werden. Wird eine freie Nebenspur erkannt und diese mit Schwarmdaten abgesichert, wird eine Spurwechselempfehlung ausgegeben.

In einer beispielhaften Fahrsituation kann sich ein Fahrzeug von hinten mit erheblicher Differenzgeschwindigkeit an ein Ego-Fahrzeug annähern, dessen rechte Fahrspur frei ist. In dem Fall wird eine dringende Wechselempfehlung auf die rechte Fahrspur ausgegeben. Differenzgeschwindigkeiten zwischen den Fahrzeugen können über Radar (Car2Car weist eine höhere Genauigkeit und größere Reichweite auf) ermittelt werden. Das vordere Fahrzeug kriegt die Warnung oder die Spurwechselempfehlung angezeigt, wenn die mögliche Zielfahrspur frei ist. Dies kann durch einen Abgleich von Frontkameradaten und/oder Radardaten und/oder Lidardaten etc. erfolgen.

Alternativ oder zusätzlich kann das hintere Fahrzeug erkennen, dass die Zielfahrspur frei ist (Car2Car/ Car2X, Lidar etc.) und eine Warnung an das vorausfahrende Fahrzeug aussenden.

In dem Anwendungsfall wird also zur Erhöhung der Verkehrssicherheit Car2Car-Kommunikation in Kombination mit der Schwarmdatenanalyse genutzt. Nähert sich ein Fahrzeug mit hoher Differenzgeschwindigkeit von hinten an, wird der Fahrer des Ego-Fahrzeugs gewarnt. Sollte die Nachbarspur die Möglichkeit bieten (durch Schwarmdaten abgesichert), so wird eine dringende Spurwechselempfehlung gegeben. Diese Kommunikation kann entweder über Detektion des schnellen Fahrzeugs über Heckkamera, Heckradare, Car2Car erfolgen und läuft auf dem "langsamen" Fahrzeug - oder kann auch eine Funktionalität des schnelleren sich annähernden Fahrzeugs sein (dann über Frontsensorik).

Die Nutzung von Schwarmdaten ist für die Erfindung von erheblicher Bedeutung, um unter anderem sicherzustellen, dass keine Wechselempfehlungen auf Ausfahrten, Standstreifen, o.ä. ausgegeben werden.

In einer weiteren beispielhaften Fahrsituation kann auf Basis von Schwarmdaten die aktuelle Fahrzeuggeschwindigkeit des Ego-Fahrzeugs mit der Durchschnittsgeschwindigkeit in der Fahrspur verglichen werden. Wenn folgende Bedingungen erfüllt sind, wird ein Warnhinweis an den Fahrer des Fahrzeugs ausgegeben, das Rechtsfahrgebot (Linksfahrgebot) zu befolgen:
- Rechte Nachbar-Spur ist frei und befahrbar (im Linksverkehr umgekehrt)
- Kein Stau
- Geschwindigkeit des Ego-Fahrzeugs liegt erheblich unter der Durchschnittsgeschwindigkeit der Fahrspur

Insgesamt zeigen die Beispiele, wie durch die Erfindung ein Verfahren zur automatisierten Spurwechselempfehlung bereitgestellt werden kann.

### Bezugszeichenliste

- 10: Kraftfahrzeug (Ego-Fahrzeug)
- 12: Ausgangsfahrspur
- 14: Zielfahrspur
- 16: Fremdfahrzeug
- 18: Straße
- 20: Spurwechselassistenzsystem
- 22: Landmarke
- 24: Fahrspurwechselempfehlung
- 26: Zielbereich
- 28: Mindestabstand
- 30: Sensorvorrichtung
- 32: Lokalisierungseinheit
- 34: Spurwechselassistent
- 36: Schwarmdaten
- 38: Servereinrichtung
- v_{A}: Ausgangsfahrspurgeschwindigkeit
- v_{E}: Eigengeschwindigkeit
- v_{F}: Fremdfahrgeschwindigkeit
- v_{Z}: Zielfahrspurgeschwindigkeit

## Patentansprüche

1. Verfahren zum Erzeugen einer Fahrspurwechselempfehlung (24) für ein Kraftfahrzeug (10) von einer Ausgangsfahrspur (12) in eine Zielfahrspur (14) einer Straße (18), wobei sich das Kraftfahrzeug (10) mit einer Eigengeschwindigkeit (v_{E}) entlang der Ausgangsfahrspur (12) der Straße (18) bewegt, wobei
- eine jeweils aktuelle Eigenposition des Kraftfahrzeugs (10) entlang der Ausgangsfahrspur (12) in einer digitalen Umgebungskarte bestimmt wird, wobei in der digitalen Umgebungskarte für die jeweils aktuelle Eigenposition entlang der Ausgangsfahrspur (12) eine durchschnittliche bekannte Ausgangsfahrspurgeschwindigkeit (v_{A}) hinterlegt ist, wobei
- ein Spurwechselassistent (34) die Eigengeschwindigkeit (v_{E}) des Kraftfahrzeugs (10) mit der Ausgangsfahrspurgeschwindigkeit (v_{A}) vergleicht und die Fahrspurwechselempfehlung (24) von der Ausgangsfahrspur (12) in die Zielfahrspur (14) erzeugt, sobald eine Abweichung zwischen der Eigengeschwindigkeit (v_{E}) und der Ausgangsfahrspurgeschwindigkeit (v_{A}) einen vorbestimmten Grenzwert erreicht.

2. Verfahren nach Anspruch 1, wobei der Spurwechselassistent (34) die Fahrspurwechselempfehlung (24) erzeugt, sobald die Eigengeschwindigkeit (v_{E}) näher an einer durchschnittlichen bekannten Zielfahrspurgeschwindigkeit (vz) liegt als an der Ausgangsfahrspurgeschwindigkeit (v_{A}).

3. Verfahren nach einem der vorhergehenden Ansprüche, wobei der Spurwechselassistent (34) die Fahrspurwechselempfehlung (24) erzeugt, wenn erkannt wird, dass die Zielfahrspur (14) zumindest innerhalb eines Zielbereichs (26) frei ist.

4. Verfahren nach einem der vorhergehenden Ansprüche, wobei der Spurwechselassistent (34) die Fahrspurwechselempfehlung (24) erzeugt, wenn die Zielfahrspur (14) zumindest einer vorbestimmten Fahrspurkategorie zugeordnet ist.

5. Verfahren nach einem der vorhergehenden Ansprüche, wobei der Spurwechselassistent (34) die Fahrspurwechselempfehlung (24) erzeugt, wenn zumindest ein Abstand zwischen dem Kraftfahrzeug (10) und zumindest einem weiteren Kraftfahrzeug (16) in der Ausgangsfahrspur (12) kleiner als ein vorbestimmter Mindestabstand ist.

6. Verfahren nach einem der vorhergehenden Ansprüche, wobei der Spurwechselassistent (34) die Fahrspurwechselempfehlung (24) erzeugt, wenn erkannt wird, dass sich ein weiteres Kraftfahrzeug (16) dem Kraftfahrzeug (10) von hinten mit einer vorbestimmten Mindestgeschwindigkeit annähert.

7. Verfahren nach einem der vorhergehenden Ansprüche, wobei der Spurwechselassistent (34) die Fahrspurwechselempfehlung (24) erzeugt, wenn erkannt wird, dass das Kraftfahrzeug (10) zumindest einmal durch ein weiteres Kraftfahrzeug (16) auf der Zielfahrspur (14) überholt wird, insbesondere innerhalb eines vorbestimmten Zeitintervalls.

8. Verfahren nach einem der vorhergehenden Ansprüche, wobei die Ausgangsfahrspurgeschwindigkeit (v_{A}) und/oder die Zielfahrspurgeschwindigkeit (vz) durch einen Vergleich mit zumindest einer weiteren durchschnittlichen bekannten Fahrgeschwindigkeit einer zu der Ausgangsfahrspur (12) und/oder der Zielfahrspur (14) benachbart angeordneten weiteren Fahrspur plausibilisiert wird.

9. Spurwechselassistenzsystem (20), das dazu ausgebildet ist, ein Verfahren nach einem der vorhergehenden Ansprüche durchzuführen.

10. Kraftfahrzeug (10) mit einem Spurwechselassistenzsystem (20) nach Anspruch 9.
